# EUROPEAN PATENT APPLICATION

(11) **EP 2 752 107 A1**
(43) Date of publication of application: **09.07.2014**
(21) Application number: 11871809.7
(22) Date of filing: 20.10.2011
(51) Int. Cl.: A01D 69/08

(54) **CLUTCH TRANSMISSION DEVICE FOR SELF-PROPELLED MOWER**

(30) Priority: 30.08.2011 CN 201110254710
(71) Applicant: Fujian Jinjiang Sanli Engine Co., Ltd, Jinjiang Fujian 362263 (CN)
(72) Inventor: WU, Guohui, Jinjiang Fujian 362263 (CN); ZHANG, Jian, Jinjiang Fujian 362263 (CN); GUO, Wencai, Jinjiang Fujian 362263 (CN)
(74) Representative: Verscht, Thomas Kurt Albert
(86) International application number: PCT/CN2011/081003
(87) International publication number: WO 2013/029296

(57) **Abstract**

A clutch transmission device for a self-propelled mower comprises a housing assembly (11, 12), a shaft rod (20), a worm wheel assembly (30), a worm (40), a sliding sleeve (62), a rocker-arm (63), a return spring (64) and a clutch stay wire. Compared with the prior art, the driving motor for the cutter of the mower drives the transmission assembly, and the transmission assembly drives the worm (40) and the worm wheel assembly (30), and the worm (40) drives the shaft rod (20) by the cooperation of the balls (32) and the holes, such that the clutch transmission device engages the transmission assembly and the wheel of the mower. The clutch transmission device has small size, novel and reliable structure, low friction loss and clutch noise, and has no transmission-lock components, such as keys or pins. The parts of the device are easy to produce. The device is easy to operate and has complete disengagement and has no slipping.

## Description

### Field of the invention

The present invention relates to a grass cutter, especially to a clutch actuating device for the grass cutter and other machine.

### Background of the invention

The existing grass cutter is walking through the wheel of the grass cutter driving by manual. But the cutter of the grass cutter is driven by the motor with high speed rotation to cut off the grass, and the grass cut off is discharged from the cutter along the rotation direction of the cutter. The grass cutter can cut off the grass fast, but it needs the user to push the grass cutter. The physiological load is heavy for the large area work.

For that reason, the existing self-propelled grass cutter is provided with an additional driving motor for the wheel to drive the grass cutter self-propelled. However, this will add much to the cost of the grass cutter.

Therefore, an idea that the wheel of the grass cutter is driven by the motor of the cutter is come out. The china's patent CN2499262Y is provided with a gear shaft driving device for a self-propelled grass cutter, which is disposed besides one set of the wheel on the bottom of the grass cutter. The gear shaft driving device includes a lower housing and an upper housing, which is jointed together to form an accommodating room inside. The accommodating room is disposed with a shaft lever, a gear, two moving cones and two fixation pieces, two fixation oil seals, a worm and a lifting lever; a driving structure is disposed to connect to the worm and the driving central spindle of the motor of the cutter. the utility model is applied with the output energy of motion of the cutter of the grass cutter to make the wheel of the grass cutter self-rotated. But it has disadvantages below: the device is structural complex with much connection friction of the clutch and much noise of the clutch, which might come out with incomplete disengaging and slipping.

### Summary of the invention

The object of the present invention is to overcome the disadvantages of the existing technology and provide with a clutch actuating device for a self-propelled grass cutter, which is self-propelled by the driving of the motor of the cutter of the grass cutter.

The technical proposal of the present invention is:

A clutch actuating device for a self-propelled grass cutter includes:

A housing component with accommodating room inside;

A shaft lever, which is passed though the housing component, the two ends of the shaft lever is extended out of the housing component, the portion the shaft lever situated inside the accommodating room is disposed with several ball sockets;

A turbine component, which is sleeved in the shaft lever and situated inside the accommodating room, one side of the turbine component is disposed with several circular holes corresponding to the ball sockets, the several circular holes and the several ball sockets are formed to be several ball holes, each ball hole is disposed with a ball;

A worm, which is sleeved outside the several circular balls of the turbine component, one end of the worm is extended out of the housing component and connected to a driving component;

A sliding sleeve, which is sleeved outside the several ball holes of the turbine component;

The sliding sleeve moves a certain distance towards the turbine component, making the balls situated in the ball hole formed from the circular hole and the ball socket and then the clutch actuating device clutch engaged; on the contrary, the sliding sleeve moves off the turbine component, making the balls away from the ball socket under the action of the centrifugal force and then the clutch actuating device clutch disengaged.

The present invention further includes:

A pendulum lever, which is connected to the sliding sleeve and applied to drive the sliding sleeve moving back and forth along the turbine component;

A rocker arm, which is fixed in one end of the pendulum lever;

A pull-off spring, one end of which is fixed in the rocker arm, the other end in the housing component;

A clutch wire, connected to the rocker arm.

The driving component is a belt pulley; the belt pulley is driving connected to the driving motor of the cutter of the self-propelled grass cutter.

The housing component is consisting of an upper housing and a lower housing, the upper housing and the lower housing are jointed together to form the accommodating room.

The sliding sleeve is disposed with grooves outside, the two ends of the inner side of the pendulum lever are disposed with catch cylinders, and the catch cylinders are locked to the grooves.

The two sides of the turbine component are separately disposed with a limiting component, each limiting component is consisting of a limiting loop lifter and a bayonet lock, the bayonet lock is passed through the shaft lever and embedded to the limiting loop lifter, the limiting loop lifter is sleeved outside the shaft lever.

The external side of the limiting loop lifter in the shaft lever is sleeved with support boss.

The external side of the support boss is disposed with oil seal.

The rocker arm is fixed to the pendulum lever by the elastic bayonet lock, the driving component is fixed to the worm by the elastic bayonet lock.

As known from the above description of the present invention, compared to the existing technology, the present invention of a clutch actuating device for a self-propelled grass cutter is provided with the driving component rotated by the driving motor of the cutter of the grass cutter. the turbine component is rotated by the driving of the driving component, the leave-joint between the driving component and the wheel of the grass cutter is realized by the cooperation of the balls and the ball holes between the worm and the shaft lever. The present invention is provided with small size and easy-made components and without key, pin or other lock components. The structure is novel and reliable with labor-saving operation, low friction consumption, low clutch noise, complete disengaging and non-sliding.

### Brief description of the drawings

Fig.1 illustrates the breakdown structure of the embodiment of the present invention.
Fig.2 illustrates the partial sectional structure of the embodiment of the present invention.
Fig.3 illustrates the partial breakdown structure of the embodiment of the present invention.

### Detailed description of the embodiments

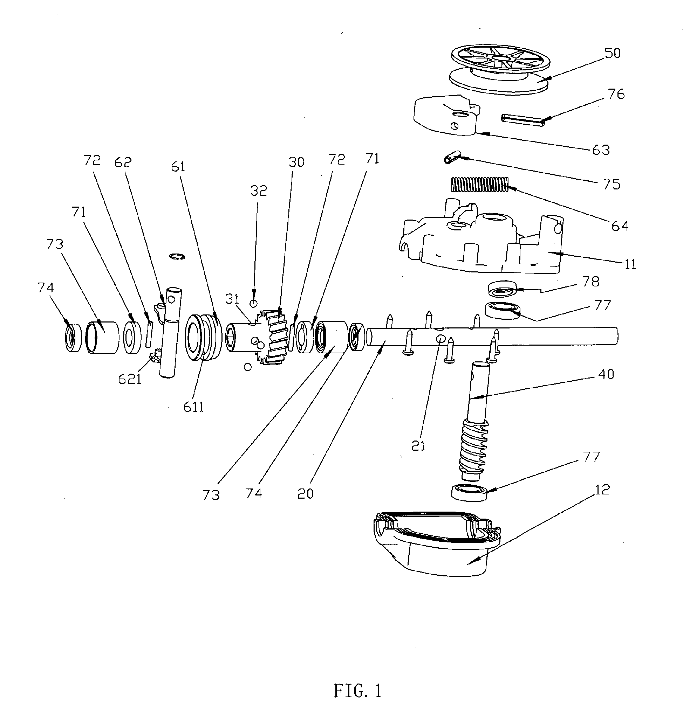

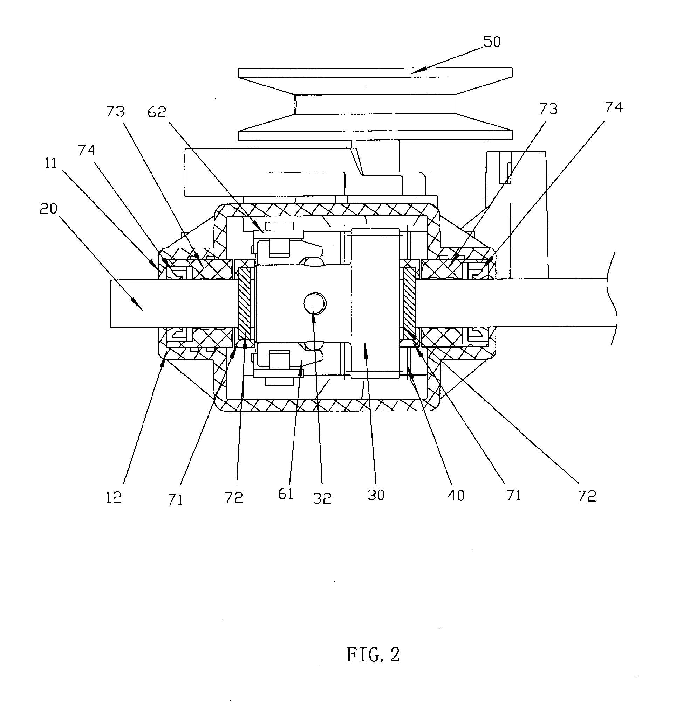

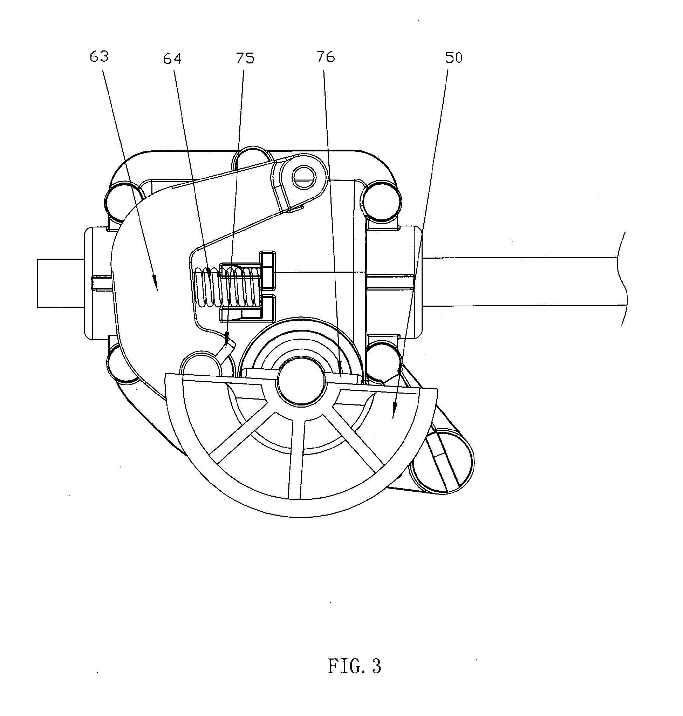

Refer to the fig.1, fig.2 and fig.3, a clutch actuating device for a self-propelled grass cutter of the present invention includes a housing component, a shaft lever 20, a turbine component 30, a worm 40, a sliding sleeve 61, a pendulum lever 62, a rocker arm 63, a pull-off spring 64 and a clutch wire.

The housing component is consisting of an upper housing 11 and a lower housing 12. The upper housing 11 and the lower housing 12 are jointed together to form an accommodating room.

The shaft lever 20 is passed through the housing component, the two ends of the shaft lever 20 is extended out of the housing component, the portion the shaft lever 20 situated inside the accommodating room is disposed with four ball sockets 21; the two ends of the shaft lever 20 are passed through the two fixation disk beside the grass cutter with lubricating components. The ends of the shaft lever 20 are separately disposed with a boom head gear, which is engaged to the gear inside the rear wheel of the grass cutter.

The turbine component 30 is sleeved in the shaft lever 20 and situated inside the accommodating room, one side of the turbine component 30 is disposed with four circular holes 31 one-to-one corresponding to the four ball sockets 21, the four circular holes 31 and the four ball sockets 21 are formed to be four ball holes, each ball hole is disposed with a ball 32.

The worm 40 is sleeved in the housing component; one end of the worm 40 is extended out of the housing component and connected to the belt pulley 50 by the elastic bayonet lock 76. The belt pulley 50 is driving connected to the driving motor of the cutter of the self-propelled grass cutter. The two ends of the worm 40 are disposed with bearings 77; the end the worm 40 extended out of the housing component is disposed with oil seal 78.

The sliding sleeve 61 is sleeved outside the four circular holes 31 of the turbine component 30. the pendulum lever 62 and the sliding sleeve 61 is cooperated connected, making the sliding sleeve 61 moving back and forth along the turbine component 30. The sliding sleeve 61 is disposed with a groove 611 outside; the two ends inside the pendulum lever 62 are disposed with catch cylinders 621, which are locked to the grooves 611.

The rocker arm 63 is fixed to one end of the pendulum lever 62 through the elastic bayonet lock 75; one end of the pull-off spring 64 is fixed to the rocker arm 63, while the other is fixed to the housing component; the clutch wire is connected to the rocker arm 63, which is not figured out in the drawings.

Two sides of the turbine component 30 are separately disposed with a limiting component, each of which is consisting of a limiting loop lifter 71 and a bayonet lock 72, the bayonet lock 72 is passed through the shaft lever 20 and embedded to the limiting loop lifter 71, the limiting loop lifter 71 is sleeved outside the shaft lever 20. The external side of the limiting loop lifter 71 in the shaft lever 20 is sleeved with support boss 73. And the external side of the support boss 73 is disposed with oil seal 74.

Refer to the fig.1, fig.2 and fig.3, when the present invention of a clutch driving device for a self-propelled grass cutter is used:

When the clutch actuating device is needed to reunion as in the separation status, pull the clutch wire, the clutch wire makes the rocker arm 63 rotating a certain angle, the pull-off spring 64 is compressed and the pendulum lever 62 rotates, the sliding sleeve 61 is forced by the groove 611 compressed by the pendulum lever 62 through the catch cylinder 621 to make the sliding sleeve 61 moving a certain distance along the turbine component 30, making the four balls 32 embedded in the four ball holes formed from the four circler holes and the four ball sockets 21 and then the clutch actuating device is reunion, the rear wheel of the grass cutter is moved by the boom head gear of the shaft lever 20, the grass cutter is self-propelled.

When the clutch actuating device is needed to separate as in the reunion status, release the clutch wire, the rocker arm 63 is returned back with the force of the pull-off spring 64, the sliding sleeve 61 is away from the turbine component 30 a certain distance by the pendulum lever 62, the balls 32 are away from the ball sockets 21 by centrifugal force, making the clutch actuating device of the present invention separated.

Although the present invention has been described with reference to the preferred embodiments thereof for carrying out the invention, it is apparent to those skilled in the art that a variety of modifications and changes may be made without departing from the scope of the present invention which is intended to be defined by the appended claims.

### Industrial applicability

The present invention of a clutch actuating device is provided that the leave-joint between the driving component and the wheel of the grass cutter is realized by the cooperation of the balls and the ball holes between the worm and the shaft lever. The present invention is provided with small size and easy-made components and without key, pin or other lock components. The structure is novel with well industrial applicability.

Furthermore, it should be particularly stated that though the title of the present invention is a clutch actuating device for a self-propelled grass cutter, the applicability of the present invention is not limited to the self-propelled grass cutter but the machine with a clutch actuating device.

## Claims

1. A clutch actuating device for a self-propelled grass cutter, wherein includes:
A housing component with accommodating room inside;
A shaft lever, which is passed though the housing component, the two ends of the shaft lever is extended out of the housing component, the portion the shaft lever situated inside the accommodating room is disposed with several ball sockets;
A turbine component, which is sleeved in the shaft lever and situated inside the accommodating room, one side of the turbine component is disposed with several circular holes corresponding to the ball sockets, the several circular holes and the several ball sockets are formed to be several ball holes, each ball hole is disposed with a ball;
A worm, which is sleeved in the housing component, one end of the worm is extended out of the housing component and connected to a driving component;
A sliding sleeve, which is sleeved outside the several ball holes of the turbine component, and can be slides along the turbine component;
The sliding sleeve moves a certain distance towards the turbine component, making the balls situated in the ball hole formed from the circular hole and the ball socket and then the clutch actuating device clutch engaged; on the contrary, the sliding sleeve moves off the turbine-component, making the balls away from the ball socket under the action of the centrifugal force and then the clutch actuating device clutch disengaged.

2. a clutch actuating device for a self-propelled grass cutter according to the claim 1, wherein further includes:
A pendulum lever, which is connected to the sliding sleeve and applied to drive the sliding sleeve moving back and forth along the turbine component;
A rocker arm, which is fixed in one end of the pendulum lever;
A pull-off spring, one end of which is fixed in the rocker arm, the other end in the housing component;
A clutch wire, connected to the rocker arm.

3. A clutch actuating device for a self-propelled grass cutter according to the claim 2, wherein the driving component is a belt pulley, the belt pulley is driving connected to the driving motor of the cutter of the self-propelled grass cutter.

4. A clutch actuating device for a self-propelled grass cutter according to the claim 2, wherein the housing component is consist of an upper housing and a lower housing, the upper housing and the lower housing are joint together to form the accommodating room.

5. A clutch actuating device for a self-propelled grass cutter according to the claim 2, wherein the sliding sleeve is disposed with grooves outside, the two ends of the inner side of the pendulum lever are disposed with catch cylinders, the catch cylinders are locked to the grooves.

6. a clutch actuating device for a self-propelled grass cutter according to the claim 2, wherein the two sides of the turbine component are separately disposed with a limiting component, each limiting component is consisting of a limiting loop lifter and a bayonet lock, the bayonet lock is passed through the shaft lever and embedded to the limiting loop lifter, the limiting loop lifter is sleeved outside the shaft lever.

7. a clutch actuating device for a self-propelled grass cutter according to the claim 6, wherein the external side of the limiting loop lifter in the shaft lever is sleeved with support boss.

8. a clutch actuating device for a self-propelled grass cutter according to the claim 7, wherein the external side of the support boss is disposed with oil seal.

9. a clutch actuating device for a self-propelled grass cutter according to the claim 2, wherein the rocker arm is fixed to the pendulum lever by the elastic bayonet lock, the driving component is fixed to the worm by the elastic bayonet lock.
